# EUROPÄISCHE PATENTANMELDUNG

(11) **EP 2 095 700 A2**
(43) Veröffentlichungstag der Anmeldung: **02.09.2009**
(21) Anmeldenummer: 09002089.2
(22) Anmeldetag: 14.02.2009
(51) Int. Cl.: A01B 63/14

(54) **Hydraulisch aktivierte elektronische Steuerung und Steuerungsverfahren**

(30) Priorität: 27.02.2008 DE 102008011320
(71) Anmelder: Lemken GmbH & Co. KG, 46519 Alpen (DE)
(72) Erfinder: Meurs, Wilhelm, 46519 Alpen (DE); Van Den Boom, Marco, 46509 Xanten (DE); Bongaerts, Eric, 6591 XN Gennep (NL)
(74) Vertreter: Schulte & Schulte

(57) **Zusammenfassung**

Ein Verfahren dient zur Steuerung eines landwirtschaftlichen Gerätes mit einer Mehrzahl von hydraulisch gesteuerten Aggregaten 10, 11, die über ein traktorseitiges Steuergerät 3 bedient werden. Bei Bedienung dieses Steuergerätes 3 werden über eine elektronische Überwachungseinheit 1 ein oder mehrere Signale an eine elektronische Steuereinheit 2 gesandt. Nach Auswertung des oder der Signale durch diese elektronische Steuereinheit 2 erfolgt eine Folgesteuerung der hydraulischen Aggregate 10, 11.

## Beschreibung

Die Erfindung betrifft ein Verfahren zur Steuerung eines landwirtschaftlichen Gerätes, insbesondere eines Drehpflugs, einer Drillmaschine, einer Bestellkombination o. dgl., mit einer Mehrzahl von hydraulisch gesteuerten Aggregaten, die über ein traktorseitiges Steuergerät bedient werden. Außerdem betrifft die Erfindung ein landwirtschaftliches Gerät, insbesondere einen Drehpflug, eine Drillmaschine, eine Bestellkombination oder dgl. mit einer Mehrzahl von hydraulisch gesteuerten Aggregaten, die über ein traktorseitiges Steuergerät bedienbar sind.

Landwirtschaftliche Geräte wie z. B. Drehpflüge, Drillmaschinen oder Bestellkombinationen verfügen über eine Mehrzahl von hydraulisch gesteuerten Aggregaten wie z.B. Zylindern, die vom Traktor aus gesteuert werden. Bisher bekannte Techniken haben sich allerdings dahingehend als nachteilig erwiesen, dass ein schnelles und präzises Ansprechen dieser hydraulisch gesteuerten Aggregate nicht in zufrieden stellender Weise möglich war.

Von daher stellt sich der vorliegenden Erfindung die Aufgabe, ein Verfahren zur Steuerung eines landwirtschaftlichen Gerätes mit einer Mehrzahl von hydraulisch gesteuerten Aggregaten und ein solches landwirtschaftliches Gerät zu schaffen, die über ein traktorseitiges Steuergerät in besonders schneller und präziser Form bedient werden können.

Diese Aufgabe wird verfahrensgemäß dadurch gelöst, dass bei Bedienung des traktorseitigen Steuergerätes über eine elektronische Überwachungseinheit ein oder mehrere Signale an eine elektronische Steuereinheit gesendet werden und dass durch die elektronische Steuereinheit nach Auswertung des Signals oder der Signale eine Folgesteuerung der hydraulischen Aggregate ausgelöst wird.

Wird das traktorseitige Steuergerät betätigt, wird dies über eine auf elektronischer Basis funktionierende Überwachungseinheit festgestellt. Dies erfolgt beispielhaft, indem eine Veränderung in dem hydraulischen System festgestellt wird. Anschließend erfolgt eine Signalgebung an eine ebenfalls auf elektronischer Basis funktionierende Steuereinheit, in der das eingehende Signal oder die eingehenden Signale ausgewertet werden. In Abhängigkeit von dieser Auswertung erfolgt dann eine Folgesteuerung der hydraulischen Aggregate. Damit ist eine besonders präzise und schnell arbeitende hydraulisch aktivierte elektronische Steuerung ohne separate elektronische Bedieneinheit für ein landwirtschaftliches Gerät geschaffen.

Zweckmäßigerweise ist vorgesehen, dass die Folgesteuerung der hydraulischen Aggregate über einen hydraulischen Steuerblock ausgelöst wird. Dieser umfasst eine Vielzahl von zur Steuerung der hydraulischen Aggregate dienenden Magnetventilen.

Es wurde bereits darauf hingewiesen, dass eine Ausführungsform der Erfindung vorsieht, dass Änderungen im Hydraulikkreislauf über die elektronische Überwachungseinheit festgestellt werden, was dann letztlich zu der elektronisch gesteuerten Folgesteuerung führt. Insofern ist vorgesehen, dass die elektronische Überwachungseinheit als Strömungswächter ausgebildet ist, der in der Hydraulikleitung zwischen dem traktorseitigen Steuergerät und dem hydraulischen Steuerblock angeordnet ist. Eine Alternative hierzu sieht vor, dass über die Überwachungseinheit Veränderungen der Druckverhältnisse in dieser Hydraulikleitung festgestellt werden.

Eine Variante der Erfindung sieht dabei vor, dass die an die elektronische Steuereinheit gesandten Signale zum Erzielen einer zeitlich und/oder in Reihe ablaufenden Folgesteuerung der einzelnen Aggregate ausgewertet werden.

Den hydraulischen Aggregaten sind üblicherweise zu ihrer Steuerung Magnetventile zugeordnet. Diesbezüglich ist vorgesehen, dass über die elektronische Steuereinheit die den hydraulisch gesteuerten Aggregaten zugeordneten Ventile des hydraulischen Steuerblocks geschaltet werden. Das oder die an die elektronische Steuereinheit gesandten Signale werden ausgewertet und z. B. über einen Mikrocontroller ist dann dafür gesorgt, dass die den hydraulisch gesteuerten Aggregaten zugeordneten Ventile auf bestimmte Zeitpunkte richtig geschaltet werden. Durch die Auswertung und Abspeicherung der steigenden und fallenden Flanken des Steuerungssignals kann stets über den Mikrocontroller eine Schaltung der Ventile erfolgen. Dies gilt auch für den Fall, dass das Steuergerät zwischenzeitlich nicht betätigt worden sein sollte. Ein vom Bediener unterbrochener Vorgang kann somit normal fortgesetzt und beendet werden.

Es ist außerdem vorgesehen, dass im Rahmen der Folgesteuerung mehrere Aggregate parallel und/oder nacheinander geschaltet werden, was ebenfalls durch die elektronische Steuereinheit bzw. den Mikrocontroller bewerkstelligt werden kann.

Über die eigentlichen an einem landwirtschaftlichen Gerät vorgesehenen Aggregate hinaus ist es auch denkbar, dass im Rahmen der Folgesteuerung Zusatzaggregate wie Sensoren oder Taster zur Anwendung kommen.

Vorrichtungsgemäß wird die erfindungsgemäße Aufgabe dadurch gelöst, dass dem traktorseitigen Steuergerät eine elektronische Überwachungseinheit zugeordnet ist, die bei Betätigung des traktorseitigen Steuergerätes ein oder mehrere Signale an eine elektronische Steuereinheit sendet, die nach Auswertung des Signals bzw. der Signale eine Folgesteuerung der hydraulisch gesteuerten Aggregate auslöst.

Über die elektronische Überwachungseinheit, vorzugsweise einen Strömungswächter, werden bei Betätigung des traktorseitigen Steuergerätes Veränderungen im Hydraulikkreislauf in dem Moment, in dem der Bediener das traktorseitige Steuergerät betätigt, festgestellt. Nach einer Auswertung des Signals bzw. der Signale kann dann eine Folgesteuerung der hydraulisch gesteuerten Aggregate des landwirtschaftlichen Gerätes erfolgen. Dabei wird über das traktorseitige Steuergerät zwar durch den Bediener ausschließlich in den Hydraulikkreislauf eingegriffen, letztlich erfolgt die Steuerung hydraulisch aktiviert, aber elektronisch und damit schnell und präzise. Vorteilhafterweise kann dabei eine elektronische Bedieneinheit eingespart werden.

Ferner ist vorgesehen, dass die elektronische Steuereinheit eine Folgesteuerung der hydraulisch gesteuerten Aggregate über einen hydraulischen Steuerblock auslöst.

Eine weitere Ausführung der Erfindung in Bezug auf das landwirtschaftliche Gerät sieht außerdem vor, dass die elektronische Überwachungseinheit als Strömungswächter ausgebildet ist und in der Hydraulikleitung zwischen dem traktorseitigen Steuergerät und dem hydraulischen Steuerblock angeordnet ist. Eine alternative Ausführungsform hierzu sieht vor, dass die Änderung der Druckverhältnisse in dem Hydraulikkreislauf festgestellt wird und unter dieser Voraussetzung eine entsprechende Steuerung erfolgt.

Zudem ist vorgesehen, dass die elektronische Steuereinheit zur Schaltung der Ventile für die Steuerung der einzelnen Aggregate über den hydraulischen Steuerblock dient. Angesprochen werden über die elektronische Steuereinheit also die Ventile, die dem hydraulischen Steuerblock zugeordnet sind und über die dann eine Steuerung der eigentlichen hydraulischen Verbraucher erfolgt.

In Hinblick auf die Positionierung der Überwachungseinheit, die die Veränderungen im Hydraulikkreislauf aufgrund der Betätigung des traktorseitigen Steuergerätes feststellen soll, ist daran gedacht, dass die Überwachungseinheit zwischen dem traktorseitigen Steuergerät und dem Steuerblock angeordnet ist. Aufgrund dieser Positionierung ist gewährleistet, dass die Betätigung des traktorseitigen Steuergerätes unmittelbar festgestellt wird und eine entsprechende Signalgebung erfolgt.

Was die einzelnen Aggregate betrifft, so ist vorgesehen, dass sich bei den hydraulisch gesteuerten Aggregaten um Drehzylinder und /oder Einschwenkzylinder handelt.

Die Erfindung zeichnet sich insbesondere dadurch aus, dass ein Verfahren zur hydraulisch aktivierten hydraulischen Steuerung eines landwirtschaftlichen Gerätes und ein solches Gerät geschaffen sind, mit denen eine besonders präzise und schnelle Steuerung von hydraulischen Aggregaten, wie z. B. Dreh- und/oder Einschwenkzylindern erreicht werden kann. Eine hydraulisch aktivierte Folgesteuerung dieser Aggregate kann elektronisch gewährleistet werden, ohne dass es hierfür notwendig wäre, eine elektronische Bedieneinheit vorzusehen. Vielmehr reicht ein traktorseitiges hydraulisches Steuergerät, dessen Bedienung unmittelbar über eine elektronische Überwachungseinheit festgestellt wird. Entsprechende Signale werden dann eine elektronische Steuereinheit gesendet, die sie auswertet und dann gegebenenfalls die Folgesteuerung der hydraulischen Aggregate auslöst. Das Steuersignal wird z.B. über einen Mikrocontroller ausgewertet, der seinerseits dann die entsprechenden Hydraulikventile auf bestimmte Zeitpunkte richtig schaltet. Durch die Auswertung die Abspeicherung der steigenden und fallenden Flanken des Signals des Strömungswächters kann der Mikrocontroller die Hydraulikventile stets richtig schalten, auch wenn das Steuergerät zwischendurch nicht betätigt wurde. Ein vom Anwender unterbrochener Vorgang kann damit normal fortgesetzt und beendet werden.

Weitere Einzelheiten und Vorteile des Erfindungsgegenstandes ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist.

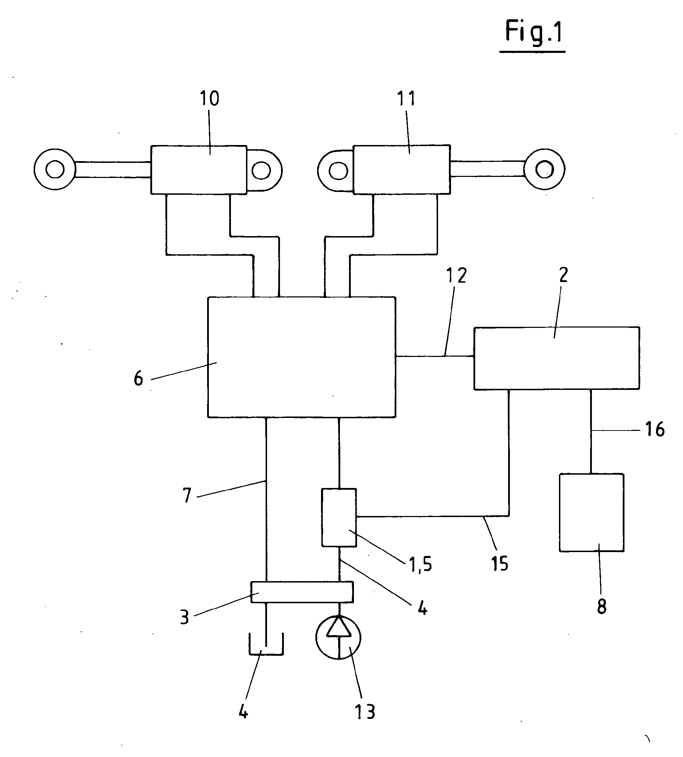

Figur 1 stellt ein grobes Schema des erfindungsgemäßen Verfahrens und der in diesem Rahmen für die Steuerung des landwirtschaftlichen Gerätes erforderlichen Aggregate dar. Gezeigt ist dort ein Hydraulikkreislauf mit der Pumpe 13 und dem Tank 14 jenseits des traktorseitigen Steuergerätes 3. Wird letzteres bedient, macht sich dies in der Hydraulikleitung 4 dahingehend bemerkbar, dass sich die Strömungs- und/oder Druckverhältnisse ändern. Dies wird über die als Strömungswächter 5 ausgebildete Überwachungseinheit 1 festgestellt. Daraufhin werden ein oder mehrere Signale an die elektronische Steuereinheit 2 gesendet und dort ausgewertet. Hierzu kann die Steuereinheit mit einem oder mehreren hier nicht dargestellten Mikrocontrollern ausgerüstet sein. Es erfolgt dann bei entsprechenden Signalen eine Folgesteuerung der hier beispielhaft mit den Bezugszeichen 10 und 11 versehenen hydraulischen Aggregate, einem Drehzylinder 10 und einem Einschwenkzylinder 11. Ausgelöst wird diese Folgesteuerung der der Drehzylinder 10 und Einschwenkzylinder 11 über den hydraulischen Steuerblock 6 mit einer Vielzahl von hier nicht dargestellten Magnetventilen. Mit dem Bezugszeichen 8 sind Aggregate bezüglich der Sensorik, wie Winkelsensoren oder Taster, mit dem Bezugszeichen 7 die Hydraulikrückleitung bezeichnet. Während es sich bei den Leitungen 4 und 7 um Hydraulikleitungen handelt, sind die Leitungen 12 zwischen Steuerblock 6 und Steuereinheit 2, sowie 16 zwischen Steuereinheit 2 und den Zusatzaggregaten 8 und 15 zwischen Steuereinheit 2 und Überwachungseinheit 1 Elektroleitungen.

## Patentansprüche

1. Verfahren zur Steuerung eines landwirtschaftlichen Gerätes, insbesondere eines Drehpflugs, einer Drillmaschine, einer Bestellkombination o. dgl., mit einer Mehrzahl von hydraulisch gesteuerten Aggregaten, die über ein traktorseitiges Steuergerät bedient werden,
**dadurch gekennzeichnet,**
**dass** bei Bedienung des traktorseitigen Steuergerätes über eine elektronische Überwachungseinheit ein oder mehrere Signale an eine elektronische Steuereinheit gesendet werden und dass durch die elektronische Steuereinheit nach Auswertung des Signals oder der Signale eine Folgesteuerung der hydraulischen Aggregate ausgelöst wird.

2. Verfahren nach Anspruch 1,
**dadurch gekennzeichnet,**
**dass** die Folgesteuerung der hydraulischen Aggregate über einen hydraulischen Steuerblock ausgelöst wird.

3. Verfahren nach Anspruch 1,
**dadurch gekennzeichnet,**
**dass** die elektronische Überwachungseinheit als Strömungswächter ausgebildet ist, der in der Hydraulikleitung zwischen dem traktorseitigen Steuergerät und dem hydraulischen Steuerblock angeordnet ist.

4. Verfahren nach Anspruch 1,
**dadurch gekennzeichnet,**
**dass** die an die elektronische Steuereinheit gesandten Signale zum Erzielen einer zeitlich und/oder in Reihe ablaufenden Folgesteuerung der einzelnen Aggregate ausgewertet werden.

5. Verfahren nach Anspruch 1,
**dadurch gekennzeichnet,**
**dass** über die elektronische Steuereinheit die den hydraulisch gesteuerten Aggregaten zugeordneten Ventile des hydraulischen Steuerblocks geschaltet werden.

6. Verfahren nach Anspruch 1,
**dadurch gekennzeichnet,**
**dass** im Rahmen der Folgesteuerung mehrere Aggregate parallel geschaltet werden.

7. Verfahren nach Anspruch 1,
**dadurch gekennzeichnet,**
**dass** im Rahmen der Folgesteuerung mehrere Aggregate nacheinander geschaltet werden.

8. Verfahren nach Anspruch 1,
**dadurch gekennzeichnet,**
**dass** im Rahmen der Folgesteuerung Zusatzaggregate wie Sensoren oder Taster zur Anwendung kommen.

9. Landwirtschaftliches Gerät, insbesondere Drehpflug, Drillmaschine, Bestellkombination o. dgl., mit einer Mehrzahl von hydraulisch gesteuerten Aggregaten (10, 11), die über ein traktorseitiges Steuergerät (3) bedienbar sind,
**dadurch gekennzeichnet,**
**dass** dem traktorseitigen Steuergerät (3) eine elektronische Überwachungseinheit (1) zugeordnet ist, die bei Betätigung des traktorseitigen Steuergerätes (3) ein oder mehrere Signale an eine elektronische Steuereinheit (2) sendet, die nach Auswertung des Signals bzw. der Signale eine Folgesteuerung der hydraulisch gesteuerten Aggregate (10, 11) auslöst.

10. Landwirtschaftliches Gerät nach Anspruch 9,
**dadurch gekennzeichnet,**
**dass** die elektronische Steuereinheit (2) eine Folgesteuerung der hydraulisch gesteuerten Aggregate (10, 11) über einen hydraulischen Steuerblock (6) auslöst.

11. Landwirtschaftliches Gerät nach Anspruch 9,
**dadurch gekennzeichnet,**
**dass** die elektronische Überwachungseinheit (1) als Strömungswächter ausgebildet ist und in der Hydraulikleitung (4) zwischen dem traktorseitigen Steuergerät (3) und dem hydraulischen Steuerblock (6) angeordnet ist.

12. Landwirtschaftliches Gerät nach Anspruch 9,
**dadurch gekennzeichnet,**
**dass** die elektronische Steuereinheit (5) zur Schaltung der Ventile für die Steuerung der einzelnen Aggregate (10, 11) über den hydraulischen Steuerblock (6) dient.

13. Landwirtschaftliches Gerät nach Anspruch 9,
**dadurch gekennzeichnet,**
**dass** die Überwachungseinheit (1) zwischen dem traktorseitigen Steuergerät (3) und dem Steuerblock (6) angeordnet ist.

14. Landwirtschaftliches Gerät nach Anspruch 9,
**dadurch gekennzeichnet,**
**dass** es sich bei den hydraulisch gesteuerten Aggregaten um Drehzylinder (10) und/oder Einschwenkzylinder (11) handelt.
